# EUROPÄISCHE PATENTSCHRIFT

(11) **EP 3 409 957 B1**
(45) Veröffentlichungstag und Bekanntmachung des Hinweises auf die Patenterteilung: **19.02.2020**
(21) Anmeldenummer: 18173772.7
(22) Anmeldetag: 23.05.2018
(51) Int. Cl.: F16B 2/06, F16B 2/12, F16M 13/02, F16B 5/02

(54) **KLEMMEINRICHTUNG**
CLAMPING DEVICE
DISPOSITIF DE SERRAGE

(30) Priorität: 29.05.2017 DE 102017111665
(43) Veröffentlichungstag der Anmeldung: 05.12.2018
(73) Patentinhaber: Profil Verbindungstechnik GmbH & Co. KG, 61381 Friedrichsdorf (DE)
(72) Erfinder: Lembach, Andreas, 64295 Darmstadt (DE)
(74) Vertreter: Manitz Finsterwald Patent- und Rechtsanwaltspartnerschaft mbB

(56) Entgegenhaltungen:
- EP-A2- 0 228 993
- US-A- 4 402 203

## Beschreibung

Die vorliegende Erfindung betrifft eine Klemmeinrichtung, insbesondere eine Klemmeinrichtung für eine Montageeinrichtung, die eine einstellbare und feststellbare winkelmäßige Anpassung eines Gegenstandes an einen Träger zulässt.

Solche Montageeinrichtungen sind bekannt, zum Beispiel zur Anbringung eines Navigationsgeräts an die Windschutzscheibe eines Fahrzeugs, damit der Fahrer den Bildschirm des Geräts in einer für ihn günstigen Betrachtungsposition anordnen kann. Häufig wird dafür ein Träger für das Navigationsgerät mittels eines Saugknopfes an die Innenseite der Windschutzscheibe angebracht und das Navigationsgerät über ein sich zwischen dem Träger und einer Halterung am Navigationsgerät befindliches steifes Universalgelenk winkelmäßig eingestellt und durch die Reibung im Universalgelenk in der eingestellten Position gehalten.

Eine solche Anbringung hat sich durchaus bewährt, ist aber in manchen Situationen nicht ohne weiteres machbar, zum Beispiel wenn eine schwere Lampe an einer Decke zu befestigen ist oder wenn mehrere Montagepunkte verwendet werden müssen, zum Beispiel bei dem Einbau eines Projektors für ein Head-Up-Display in einem Fahrzeug. Wenn zum Beispiel ein Projektor im Armaturenbrettbereich beispielsweise in einer Vertiefung an drei oder vier Montagepunkten mittels vom Armaturenbrett abstehenden Gewindestiften anzubringen ist, muss beachtet werden, dass die genaue Ausrichtung der in der automatisierten Fertigung montierten Gewindestifte jeweilige störende winkelmäßige und koordinatenmäßige Abweichungen von der Sollposition aufweisen kann. Diese Abweichungen können aufgrund von Verformungen des Trägers - eine metallische Unterkonstruktion des Armaturenbrettes - und Fertigungstoleranzen bei der Anbringung der Gewindestifte oder anderweitiger bolzenähnlicher oder Bolzen aufnehmender Befestigungselemente entstehen. Ferner muss die Einbauposition des Projektors, insbesondere dessen Ausrichtung, genau eingestellt werden, damit die Datenanzeige an der richtigen Position im Sichtfeld des Fahrers an der Windschutzscheibe vorliegt.

Darüber hinaus soll eine automatische Positionierung und Feststellung des Projektors ermöglicht werden, was am besten nur von oben erfolgen soll.

Aufgabe der vorliegenden Erfindung ist es, eine Klemmeinrichtung vorzusehen, die für verschiedene Klemmaufgaben verwendbar ist insbesondere mit einer Montageeinrichtung, insbesondere mit einer Montageeinrichtung, die während des Einbaus relativ flexibel und daher leicht zu handhaben ist, aber im geklemmten Zustand eine im Vergleich zum flexiblen Zustand relativ hohe Steifigkeit aufweist. Ferner soll bei mehreren Montagepunkten eine zumindest im Wesentlichen gleichmäßige Lastenteilung und eine einfache Kompensation für Ausrichtungsabweichungen der Anbringungselemente erreicht werden. Darüber hinaus soll, wenigstens bei einigen Ausführungsformen, eine automatische Montage aus einer Richtung gewährleistet werden.

Die Klemmeinrichtung soll auch getrennt von der Montageeinrichtung viele weitere mögliche Anwendungen haben, um einen Gegenstand oder mehrere Gegenstände miteinander zu Klemmen, zum Beispiel in der Präzisionsmechanik, bei Instrumenten und in der Optik. Beispielsweise könnte die Klemmeinrichtung verwendet werden, um den Spiegel eines Interferometers einzustellen zu lassen und zu klemmen, damit dieser in der eingestellten Position gehalten wird. Bei einer solchen Ausführungsform könnte der Spiegel einfach entlang einer Gewindestange bewegt und in der erwünschten Position geklemmt werden, oder eine erfindungsgemäße Montageeinrichtung könnte zusätzlich vorgesehen werden, um kleine Winkelfehler des Spiegels gleichzeitig korrigieren zu lassen.

Um diese Aufgaben zu lösen wird erfindungsgemäß eine Klemmeinrichtung vorgesehen, die sich durch folgende Merkmale auszeichnet:
- durch ein erstes ein Innengewinde aufweisendes Bauteil mit einer Seite, die entweder direkt oder indirekt über ein getrenntes Teil eine erste Klemmfläche bildet,
- durch ein zweites ein Innengewinde und ein Außengewinde aufweisendes Bauteil, das axialverschiebbar aber drehfest am ersten Bauteil anbringbar ist, wobei die jeweiligen Innengewinde des ersten Bauteils und des zweiten Bauteils ausgelegt sind, um mittels eines Bolzenelements mit Außengewinde höhenverstellbar gemeinsam an einen Träger befestigt zu werden, und
- durch eine Kontermutter, die auf das Außengewinde des zweiten Bauteils aufschraubbar ist, deren, der erstgenannten Klemmfläche zugewandten, Seite entweder direkt oder indirekt über ein zweites Teil eine zweite Klemmfläche bildet, wobei die erste und zweite einander zugewandten Klemmfläche zur klemmenden Aufnahme eines Gegenstandes bzw. des Klemmbereichs der Montageeinrichtung ausgelegt sind.

Eine Klemmeinrichtung dieser Art kann als vormontiertes Gesamtpaket leicht auf einen Stehbozen oder Gewindestift oder Nietbolzen oder Stanz- und Nietbolzen oder Einpressbolzen oder Schweißbolzen zum Beispiel von oben aufgeschraubt werden. Die gegenseitige axiale Verschiebbarkeit des ersten Bauteils und des zweiten Bauteils stellt sicher, dass das Gewinde des Stehbolzens, oder einer anderweitigen Bolzenart, beide Bauteile ohne weiteres durchdringen kann, da der Längenausgleich trotz der drehfesten Anordnung eine durchgehende Gewindefurche sicherstellt. Die Drehbarkeit des Gesamtgebildes auf dem Stehbolzen, oder desgleichen, ermöglicht eine genaue Positionierung der Höhe der einen Klemmfläche gegenüber dem Träger. Durch Drehen der Kontermutter kann dann die andere Klemmfläche in Richtung auf die erstgenannte Klemmfläche bewegt werden und die Montageeinrichtung zwischen den Klemmflächen geklemmt werden, ohne die vorher eingestellte Position der erstgenannten Klemmfläche, die den Höhenausgleich sicherstellt, zu stören.

Es versteht sich dass das Innengewinde des ersten Bauteils und das Innengewinde des zweiten Bauteils die gleiche Größe und Steigung haben müssen, damit sie gemeinsam entlang eines Gewindebereichs eine Gewindebozens verfahren werden können.

Da die Montageeinheit im nicht geklemmten Zustand flexibel ist, kann sie zum Beispiel eine S-Form passend zu der Fehlorientierung des Stehbolzens, oder desgleichen, automatisch und leicht annehmen, wie auch eine etwaige in einer Querebene gekippte Position des Klemmbereichs, der vollflächig an der erstgenannten Klemmfläche anliegt. Dabei wird die von der Kontermutter gebildete Klemmfläche parallel zur erstgenannten Klemmfläche geführt, so dass auch diese Klemmfläche vollflächig zur Anlage an den Klemmbereich kommt. Beim Festziehen der Kontermutter wird das zweite Bauteil aufgrund der axialen Verschiebbarkeit zwischen dem ersten Bauteil und dem zweiten Bauteil zunächst minimal etwas von dem ersten Bauteil entfernt, wodurch die Kontermutter nun ihre konternde Funktion entfaltet und den Klemmbereich zwischen den beiden Klemmfläche festklemmt und die Montageeinrichtung automatisch in der ausgewählten ausgerichteten Position "einfriert". Die Montageeinrichtung ist nun von einem flexiblen Gebilde in ein eher steifes Gebilde umgewandelt worden, wenn auch eine gewisse dämpfende Wirkung gegeben ist.

Besonders günstig ist es, wenn das erste Bauteil am zweiten Bauteil mittels einer insbesondere leicht lösbarer Verbindung, wie zum Beispiel eine Klickverbindung, oder durch eine eher permanente Verbindung, wie ein umgebördelter Kragen, an dem einen Bauteil, das hinter einem Anschlag des anderen Bauteils eingreift, unter Beibehaltung der relativen axialen Verschiebbarkeit befestigt ist. Hierdurch bilden das erste Bauteil und das zweite Bauteil eine Einheit, die leichter handzuhaben ist, als zwei getrennte Einzelteile. Darüber hinaus wird die Kontermutter auf das Außengewinde des zweiten Bauteils aufgeschraubt und kann ggf. mit einem schwachen Gewindekleber vorfixiert werden, so dass das dreiteilige Gesamtgebilde als eine vormontierte Einheit gehandhabt bzw. transportiert werden kann.

Besonders günstig ist es auch, wenn das zweite Bauteil insbesondere im Bereich seines, dem ersten Bauteils abgewandten, Endes eine Werkzeugaufnahme zur lösbaren Anbringung eines Drehwerkzeugs aufweist, wobei die Werkzeugaufnahme des zweiten Bauteils vorzugsweise in seinen Querabmessungen kleiner ausgebildet ist als die Kontermutter, damit das zweite Bauteil und die Kontermutter mit unterschiedlichen koaxial angeordneten Drehwerkzeugen gemeinsam oder relativ zueinander drehbar sind, und von einer Seite der Konstruktion aus bedient werden können.

Hierdurch kann die obenerwähnte Gesamteinheit mittels der Werkzeugaufnahme am zweiten Bauteil zum Beispiel von oben auf den Gewindestift aufgeschraubt werden und die Kontermutter im gleichen Arbeitsgang angezogen werden.

Die Werkzeugaufnahme des zweiten Bauteils ist vorzugsweise durch eine Innenaufnahme gebildet, die vorzugsweise in das, dem ersten Bauteil abgewandte, Stirnende des zweiten Bauteils vorgesehen ist. Hierdurch kann das zweite Bauteil eine relativ einfache, Material und Platz sparende und leicht herstellbare, Form aufweisen und in etwa wie eine hohle Madenschraube mit Innengewinde oder eine Hülse mit Innen- und Außengewinde hergestellt werden.

Das erste Bauteil kann ebenfalls mit einer Werkzeugaufnahme, insbesondere in Form einer Außenmehrkant, versehen werden. Dies kann von Vorteil sein, wenn die Klemmeinrichtung manuell auf den Gewindestift oder ähnliches montiert wird oder wenn die Position einer automatisch vormontierten Klemmeinrichtung korrigiert werden soll.

Vorteilhaft ist es, wenn das erste Bauteil mit einem Flansch versehen ist, dessen, dem zweiten Bauteil zugewandten, Stirnseite direkt die erste Klemmfläche bildet oder an eine Scheibe angreift, die die erste Klemmfläche bildet. Ein solcher Flansch bzw. eine solche Scheibe vergrößert auf kostengünstigere Weise die Größe der Klemmfläche.

Aus dem gleichen Grund kann die Kontermutter mit einem Flansch versehen werden, dessen, dem ersten Bauteil zugewandten, Stirnseite direkt die zweite Klemmfläche bildet oder an eine Scheibe angreift, die die zweite Klemmfläche bildet.

Die erfindungsgemäße Klemmeinrichtung wird vorzugsweise so angewandt, dass das Außengewinde des zweiten Bauteils sich durch einen Ausschnitt im Klemmbereich der Montageeinrichtung erstreckt, wodurch die Montageeinrichtung zwischen dem ersten Bauteil und der, auf dem zweiten Bauteil aufgeschraubten, Kontermutter klemmbar ist. Dies ist zwar wahrscheinlich die beste Anordnung, ist aber nicht zwingend erforderlich.

Alternativ hierzu könnte das erste Bauteil entweder mit einer seitlich angeordneten Fahne versehen werden, deren, dem zweiten Bauteil zugewandten, Seite direkt die erste Klemmfläche bildet oder an eine Scheibe angreifen, die mit einer seitlich angeordneten Fahne versehen ist, deren, dem zweiten Bauteil zugewandten, Seite die erste Klemmfläche bildet. Hierdurch wird die erste Klemmfläche seitlich versetzt zur mittleren Längsachse des Gewindestifts angeordnet.

Ebenso könnte die Kontermutter entweder mit einer seitlich angeordneten Fahne versehen werden, deren, dem ersten Bauteil zugewandten, Seite direkt die zweite Klemmfläche bildet oder an eine Scheibe angreifen, die mit einer seitlich angeordneter Fahne versehen ist, deren, dem zweiten Bauteil zugewandten, Seite die zweite Klemmfläche bildet.

Diese seitlich versetzte Anordnung der ersten Klemmfläche und der zweiten Klemmfläche bildet dann eine Art U-förmige Klemmaufnahme, in der beispielsweise der Klemmbereich der Montageeinrichtung klemmbar ist. Die Klemmeinrichtung, bis auf die die Klemmflächen bildenden Teile, würde dann seitlich an der Montageeinrichtung vorbeilaufen.

Die Montageeinrichtung und die erfindungsgemäße Klemmeinrichtung werden nachfolgend anhand von Ausführungsbeispielen unter Bezugnahme auf die Zeichnungen näher erläutert, in welchen zeigen:
- Fig. 1A: eine perspektivische Darstellung eines Projektors eines Head-Up-Displays, das an vier Stellen mit Montageeinrichtungen versehen ist,
- Fig.1 B: eine vergrößerte perspektivische Darstellung der umkreisten Montageeinrichtung der Fig. 1A,
- Fig. 2A: eine perspektivische Darstellung einer bevorzugten Montageplatz für einen Projektor, ähnlich dem Projektor der Fig. 1A, jedoch mit drei Montagestellen anstelle von vier,
- Fig.2B: eine Darstellung ähnlich der Fig. 2A, bei der jedoch Fehlorientierungen und Positionen der für die Montage vorgesehenen Gewindebolzen angedeutet sind,
- Fig.3A: eine Seitenansicht der Montageeinrichtung der Fig.1B, in Pfeilrichtung III gesehen,
- Fig.3B: eine vergrößerte Darstellung des umkreisten Bereichs der Fig. 3A,
- Fig. 3C: eine Draufsicht auf die Montageeinrichtung der Fig. 3A in Pfeilrichtung IV gesehen,
- Fig. 3D: eine Darstellung ähnlich der Fig. 3A, jedoch mit der Montageeinrichtung in einer S-förmig gebogenen Form,
- Fig. 3E: eine Darstellung ähnlich der Fig. 1B, jedoch mit der Montageeinrichtung in einer in einer Querebene gekippten Position,
- Fig. 4A-E: eine Draufsicht (Fig. 4A), eine Seitenansicht (Fig. 4B) und eine perspektivische Ansicht (Fig.4C) eines erfindungsgemäßen Montagelements, wobei die Fig. 4D der Ansicht der Fig. 4B entspricht, jedoch mit dem Montageelement entsprechend der Fig. 3D in S-Form gebogen und die Fig. 4E ebenfalls der Ansicht der Fig. 4B entspricht, jedoch mit dem Klemmbereich des Montageelements gekippt, entsprechend der Darstellung der Fig. 3E,
- Fig. 5A-C: eine Draufsicht, eine Seitenansicht und eine perspektivische Ansicht eines erfindungsgemäßen Federelements,
- Fig. 6: eine Draufsicht auf ein dreiarmiges Montageelement,
- Fig. 7: eine Draufsicht auf ein vierarmiges Montageelement,
- Fig. 8A-C: eine perspektivische Darstellung einer erfindungsgemäßen Klemmeinrichtung, die mit der erfindungsgemäßen Montageeinrichtung gemäß den vorherigen Figuren verwendet werden kann, eine in Längsrichtung geschnittene Darstellung der Klemmeinrichtung der Fig. 8B und eine vergrößerte Darstellung des umkreisten Bereichs der Darstellung gemäß Fig. 8B,
- Fig. 9A-F: das erste Bauteil der erfindungsgemäßen Klemmeinrichtung der Fig. 8A bis C in einer Ansicht von oben, in einer Längsebene geschnittene Ansicht, in einer Seitenansicht, in einer vergrößerten perspektivischen Ansicht eines mit Längsrippen versehenen Innenbereichs, in einer perspektivischer Ansicht von unten und in einer perspektivischer Ansicht von oben,
- Fig. 10A-F: das zweite Bauteil der erfindungsgemäßen Klemmeinrichtung der Fig. 8A bis C in einer Ansicht von oben, in einer Längsebene geschnittene Ansicht, in einer Seitenansicht, in einer vergrößerten perspektivischen Ansicht eines mit Längsrippen versehenen Innenbereichs, in einer perspektivischer Ansicht von unten und in einer perspektivischer Ansicht von oben,
- Fig. 11: eine perspektivische Darstellung ähnlich der Fig. 8A, bei der aber das erste Bauteil mit einer seitlichen Fahne versehen ist, die die eine erste Klemmfläche bildet, und die Kontermutter über eine getrennte Scheibe mit seitlicher Fahne wirkt, die eine zweite Klemmfläche bildet, und
- Fig. 12: eine Darstellung ähnlich der 9C jedoch mit einer alternativen Ausbildung des ersten Bauteils mit Sechskantaufnahme für ein Werkzeug.

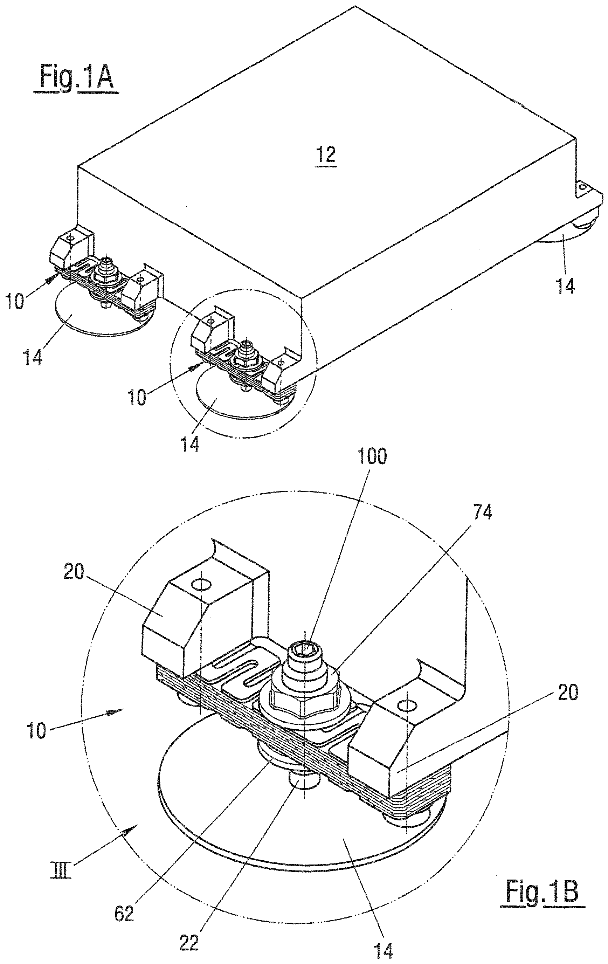

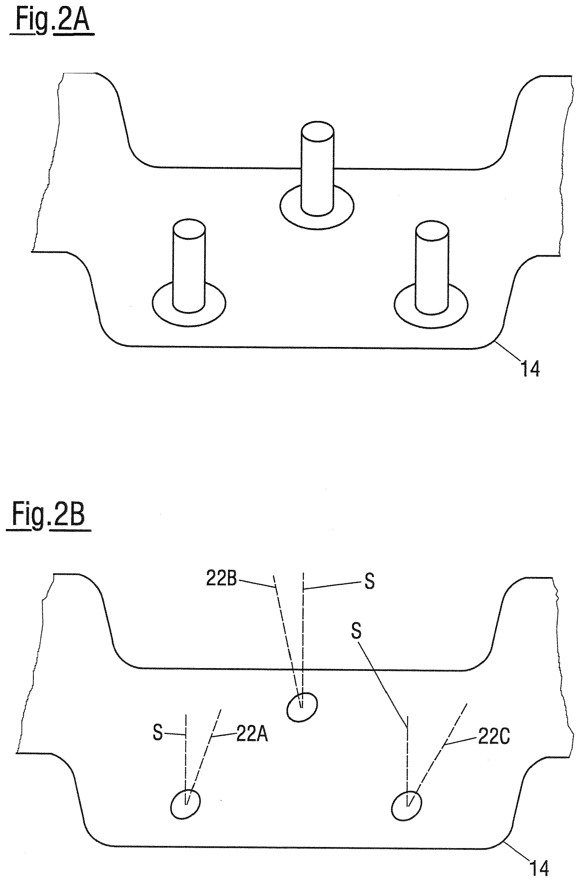

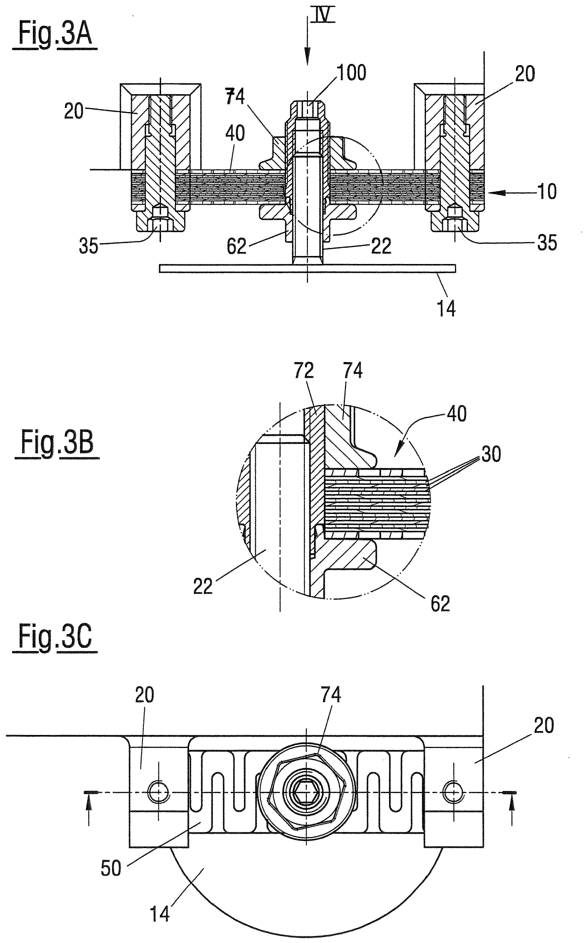

In den Fig. 1A und 1B sind drei Montageeinrichtungen 10 gezeigt, die eine einstellbare und feststellbare winkelmäßige Anpassung eines Gegenstandes 12, hier in Form eines Projektors für ein Head-up-Display, an einen Träger 14 zulässt. Im konkreten Ausführungsbeispiel sind vier Montageeinrichtungen 10 vorhanden, von denen zwei auf der Vorderseite und zwei auf der Rückseite des quaderförmigen Projektors 2 benachbart zu dessen vertikalen Kanten 16 angeordnet sind, wobei die eine Montageeirichtung an der Rückseite in der Darstellung nicht ersichtlich ist. Konkret ist jede Montageeinrichtung an ihren Enden mittels Schraubbolzen 18 (Fig. 3A bis 3E) an entsprechenden Halterungen 20 des Projektors befestigt. Der Träger 14 ist hier nur durch Kreise angedeutet, wird aber in diesem konkreten Beispiel üblicherweise durch eine Blechstruktur eines Kraftwagenarmaturenbretts gebildet, von dem ein Ausschnitt in schematischer Form detaillierter in Fig. 2A gezeigt ist. Allerdings kommen im Beispiel der Fig. 2A nur drei Montagepunkte für den Projektor 12 zum Einsatz, hier in der konkreten Form von länglichen Stanz-und Nietbolzen 22, die am Blechteil angenietet sind. Es können zum Beispiel SBF-Stanz- und Nietbolzen der Anmelderin zum Einsatz kommen, die mit ihrem Kopfteil 24 am Blech vernietet sind. Die nach oben weisende Gewinde aufweisende Schaftteile 22 der Stanz-und Nietbolzen gehen jeweils durch eine Klemmeinrichtung 28 in der Mitte jeder Montageeinrichtung, wie in den Fig. 1A und 1B gezeigt.

Die Fig. 2B zeigt, dass die Schaftteile 22 der Stanz- und Nietbolzen, die nachfolgend nur Gewindestifte genannt werden, Fehlorientierungen und Positionsfehler aufweisen können, die es zu kompensieren gilt, was mittels der erfindungsgemäßen Montageeinrichtungen 10 möglich ist, wie später näher erläutert wird.

Aus der Fig. 2B ist ersichtlich, dass die Gewindestifte 22A und 22B winkelmäßige Abweichungen von der Sollposition, die durch eine gestrichelte Linie gezeigt ist, aufweisen und der dritte Gewindestift 22C seitlich versetzt von der Sollposition ist.

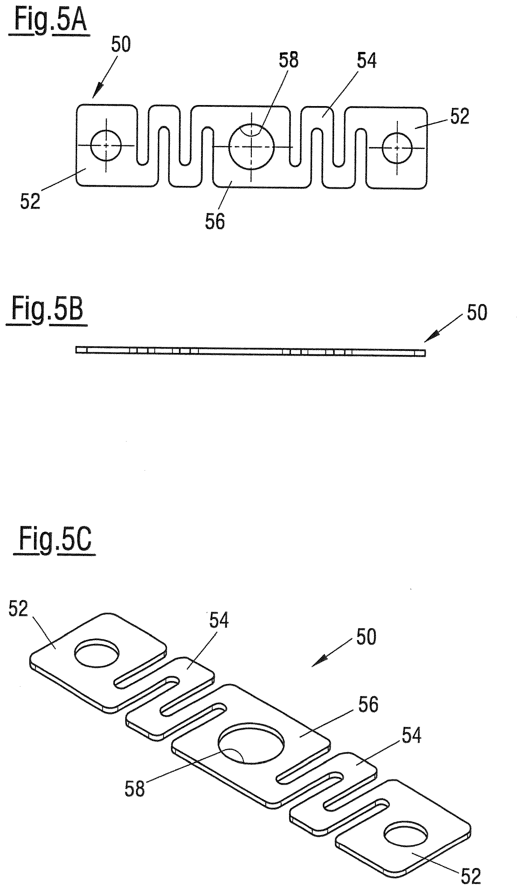

Die konkrete Konstruktion einer Montageeinrichtung 10 wird nunmehr genauer anhand der weiteren Figuren 3A bis 3E, 4A bis 4E und 5A bis 5C erklärt.

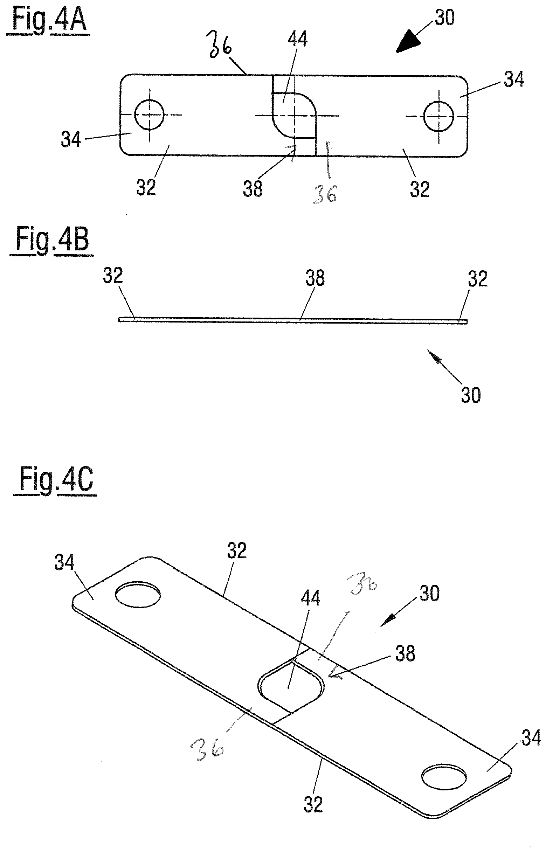

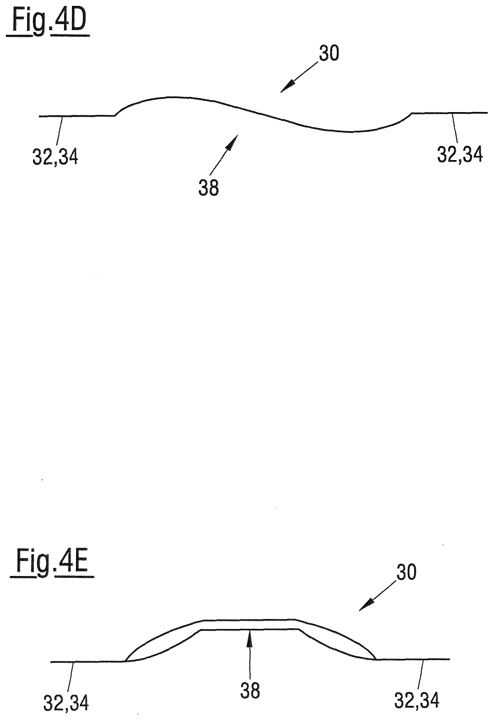

Die Montageeinrichtung 10 umfasst mindestens ein geteiltes Montageelement 30 gemäß Fig. 4A bis C, dessen zwei getrennte Teile 32 jeweils in einem Endbereich 34 einen Abschnitt aufweisen, der eine Befestigung an dem Gegenstand 12 direkt oder an einer jeweiligen am Gegenstand angebrachten Halterung 20 ermöglicht, und die an ihren, dem jeweiligen Abschnitt abgewandten, einander zugewandten und gegeneinander verschiebbaren, Enden 36 gemeinsam einen Klemmbereich 38 bilden, der eine Befestigung an dem Träger 14 ermöglicht.

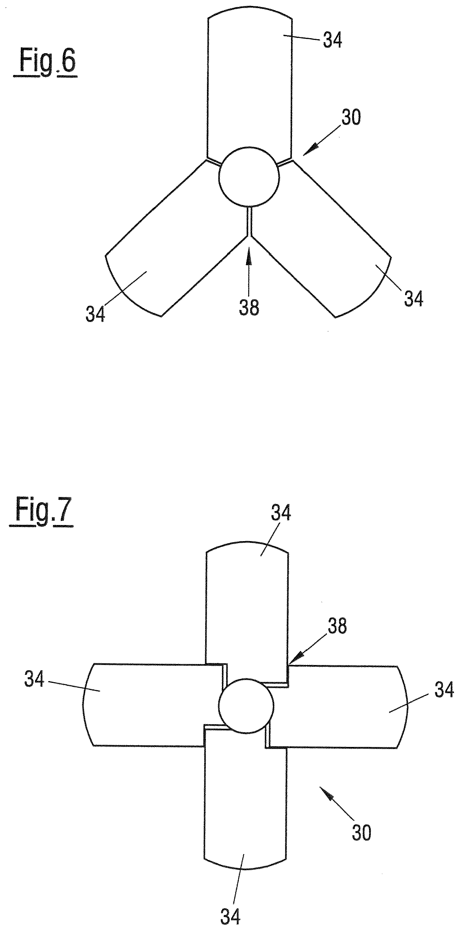

Das hier gezeigte zweiteilige Montageelement 30 kann als zweiarmig bezeichnet werden. Es sind allerdings auch drei- oder viergeteilte Ausführungen denkbar, die dann als drei- oder vierarmig bezeichnet werden. Beispiele für solche drei- oder vierarmige Montageelemente sind in den Fig. 6 und 7 gezeigt und die hier gegebene Beschreibung gilt auch sinngemäß für die Ausführungsformen nach den Fig. 6 und 7, in denen die entsprechenden Bezugszeichen soweit sinnvoll eingetragen sind.

Wie in den Fig. 3A bis 3C gezeigt, kommen normalerweise mehrere geteilte, gleichartig ausgebildete Montageelemente 30 in einer Montageeinrichtung 10 zur Anwendung. Sie sind übereinander gelegt ausgerichtet und bilden ein Montagepaket 40.

Die Teile 32 des oder jedes Montageelements 30 sind gleich ausgebildet und werden als Blechstanzteile oder als Kunststoffteil ggf. mit Faserverstärkung ausgebildet.

Die Abschnitte an den Enden 34 der Teile 32, die der Befestigung am Gegenstand bzw. an Halterungen des Gegenstands dienen, haben üblicherweise Ausschnitte, die beispielsweise als Befestigungslöcher ausgebildet sind. Sie werden mittels Befestigungsbolzen 35 an den Halterungen 20 angebracht.

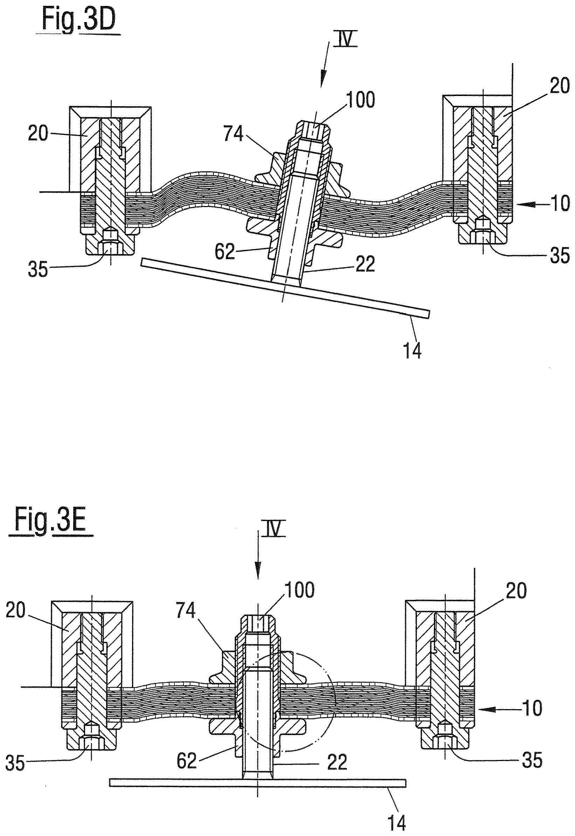

Die einander zugewandten Enden 36 der Teile 32 sind gegeneinander verschiebbar. In der ausgerichteten Stellung nach den Fig. 3A bis 3C können sie sich berühren, oder einen kleinen Abstand voneinander aufweisen. Bei Verformung der Montageelemente, wie in Fig. 3D oder 3E gezeigt, bewegen sie sich etwas auseinander. Die Teile können sich auch an ihren Enden 36 gegenseitig überlappen. In dem Fall wird der Grad der Überlappung bei Verformung des Montagelements verkleinert. In den gezeigten Beispielen weisen die einander zugewandten Enden 36 der Teile 32, die den Klemmbereich 38 bilden, jeweilige Ausschnitte 42 auf, die gemeinsam eine Öffnung 44 zur Aufnahme einer Klemmeinrichtung wie 28 (Fig. 1B) bilden.

Wie in den Fig.3A bis 3C gezeigt, bildet jedes der Teile 32 eines Montageelements 30 im Bereich des Ausschnittes 42 eine Zunge 46, die seitlich an dem Befestigungselement vorbeigeht. Bei der gezeigten Zweiteilung des Montageelements 10 sind die identisch ausgebildeten Teile 32 zueinander umgekehrt gelegt, so dass deren Zungen 46 die Klemmeinrichtung auf beiden Seiten einfassen. Beim Vorsehen von mehreren Montageelementen werden diese jeweils um 180 Grad um Ihre Längsachse 48 gedreht aufeinander gelegt, was der Stabilität der Montageeinrichtung zugutekommt.

Es ist bevorzugt, wenn mindestens auf der einen Seite des Montageelements 10, oder des Montagepakets 40, ein Federelement 50 gelegt ist, das den Befestigungsabschnitt an den Enden 34 mit einem flächigen Bereich 52 mindestens teilweise abdeckt und dazwischen mindestens einen in der Ebene des Montagelements federnden Bereich 54, hier zwei federnde Bereiche 54, aufweist. Der oder jeder Federbereich weist eine Schlangen- oder Mäanderform auf. Ferner hat das Federelement 50 vorzugsweise einen mittleren Bereich 56, der den Klemmbereich 38 mindestens teilweise überlappt und eine Öffnung 58 aufweist, die der Öffnung 44 entspricht.

In den gezeigten Beispielen ist das Federelement 50 zweimal vorgesehen, wobei die Federelemente einmal oberhalb des Montagepakets 40 und einmal unterhalb des Montagepakets 40 angeordnet sind. Auch das Federelement oder jedes Federelement kann als Blechstanzteil oder als Kunststoffteil ggf. mit Faserverstärkung ausgebildet werden.

Wie bereits angedeutet, weist jede Montageeinrichtung auch eine Klemmeinrichtung 28 auf, die am Klemmbereich klemmend wirkt und mittels eines Gewindestifts 22 am Träger 14 höhen- bzw. abstandsverstellbar anbringbar ist.

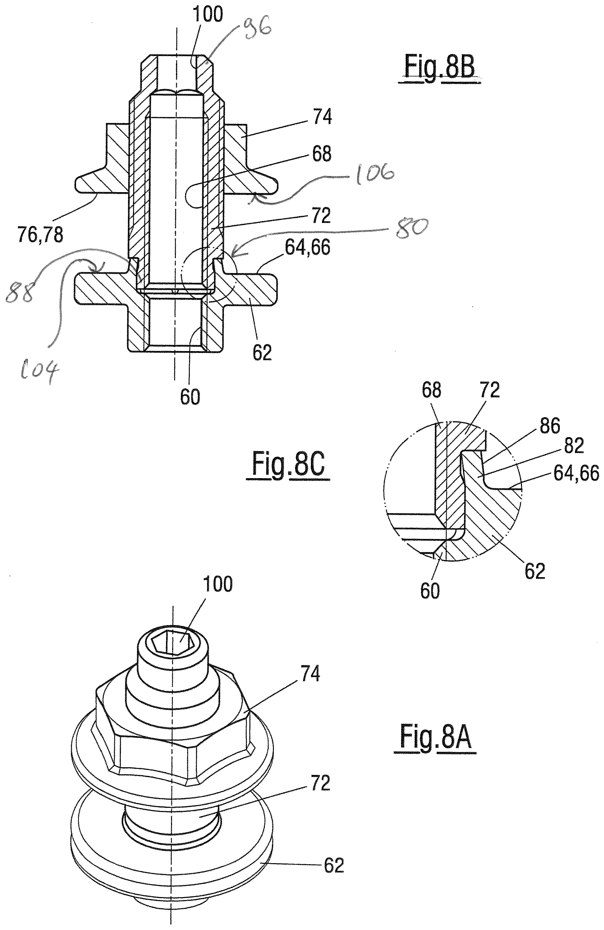

Konkret weist die Klemmeinrichtung 28 gemäß den Fig. 8A bis C folgende Bauteile auf:
- Ein erstes, ein Innengewinde 60 aufweisendes, Bauteil 62 mit einer Seite 64, die entweder direkt oder indirekt über ein getrenntes Teil eine erste Klemmfläche 66 bildet.
- Ein zweites, ein Innengewinde 68 und ein Außengewinde 70 aufweisendes, Bauteil 72, das axialverschiebbar aber drehfest am ersten Bauteil 62 angebracht ist, wobei die jeweiligen Innengewinde 60, 68 des ersten Bauteils 62 und des zweiten Bauteils 72 ausgelegt sind, um mittels eines Bolzenelements 22 mit Außengewinde axialverstellbar gemeinsam an dem Träger 14 befestigt zu werden,
- Eine Kontermutter 74, die auf das Außengewinde 70 des zweiten Bauteils 72 aufgeschraubt ist, dessen, der erst genannten Klemmfläche 66 zugewandten, Seite 76 eine zweite Klemmfläche 78 bildet.

Die erste und zweite einander zugewandten Klemmflächen 66, 78 sind zur klemmenden Aufnahme des Klemmbereichs 38 der Montageeinrichtung 10 ausgelegt.

Die Klemmeinrichtung 28 kann auch für ganz andere Klemmzwecke verwendet werden, in diesem Fall wird der zu klemmende Gegenstand zwischen den Klemmflächen 66, 74 angeordnet.

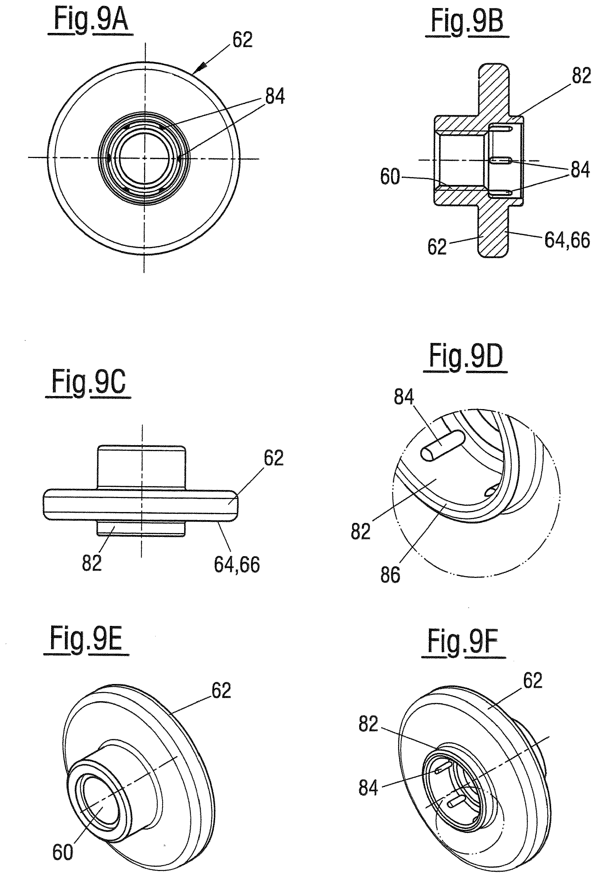

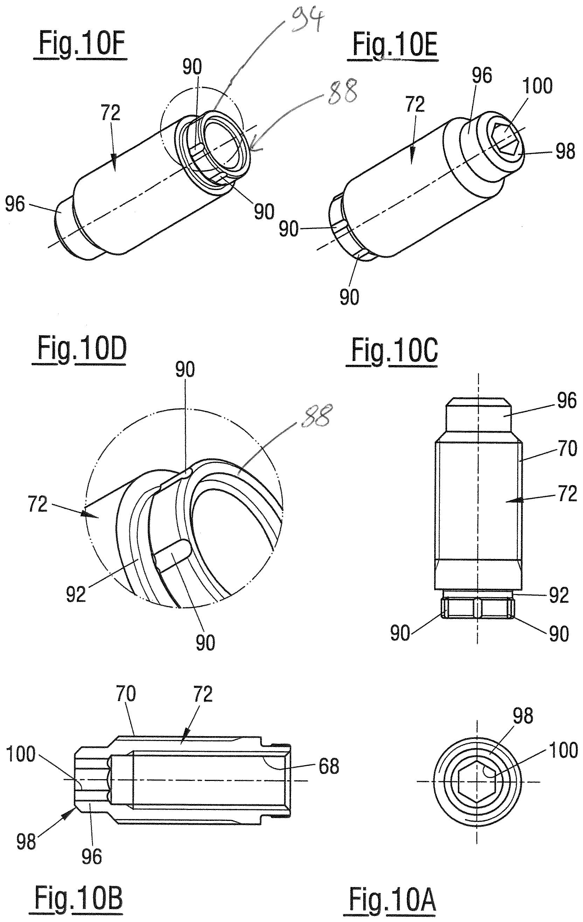

Das erste Bauteil 62 ist unter Beibehaltung der relativen axialen Verschiebbarkeit mittels einer insbesondere leicht lösbaren Verbindung 80 an dem zweiten Bauteil 72, in dieser Ausführung durch eine Klickverbindung befestigt, dessen Details am besten aus den einzelnen Zeichnungen der Fig. 9A bis F und 10A bis F hervorgehen.

Das obere Ende des ersten Bauteils ist als Hohlzylinder 82 mit Längsrippen 84 an der inneren Fläche des Hohlzylinders ausgebildet, wobei ein Ringbereich 86 oberhalb der Rippen leicht nach Innen geneigt ist (am besten bei 86 aus der Fig. 8C ersichtlich). Das untere Ende 88 des zweiten Bauteils 72 ist im Durchmesser gegenüber dessen Außengewinde 70 verkleinert und weist innere Längsnuten 90 auf, in die die Längsrippen 84 des ersten Bauteils gleitend aufgenommen sind, wodurch die gegenseitige axiale Verschiebbarkeit bei einer drehfesten Anordnung der beiden Bauteile 62, 72 sichergestellt ist. Dabei greift der radial nach Innen gerichtete Ringbereich 86 am freien Ende des Hohlzylinders 82 in eine Ringnut 92 hinter den Längsnuten 90 des zweiten Bauteils 72. Der Zylinderbereich 94 am unteren Ende des zweiten Bauteils greift somit in den Hohlzylinder 82 des ersten Bauteils 62. Die zwei Bauteile 62 und 72 sind somit aneinander befestigt aber immer noch gegeneinander axial verschiebbar, wobei das Ausmaß der axialen Verschiebbarkeit nicht mehr als die axiale Länge eines Gewindegangs betragen muss, was durch die Breite der Ringnut 92 bestimmt werden kann.

Anstelle einer Klickverbindung kann eine permanente Verbindung unter Beibehaltung der relativen axialen Verschiebbarkeit erreicht werden, wenn zum Beispiel der Ringbereich 86 wie ein Nietbördel noch tiefer in die Ringnut 92 hineingepresst wird.

Das zweite Bauteil 72 weist insbesondere im Bereich seines, dem ersten Bauteil 62 abgewandten, oberen Endes 96 eine Werkzeugaufnahme 98 zur lösbaren Anbringung eines Drehwerkzeugs auf. Die Werkzeugaufnahme 98 des zweiten Bauteils ist in seinen Querabmessungen kleiner ausgebildet als die Kontermutter 74, damit das zweite Bauteil 72 und die Kontermutter 74 mit unterschiedlichen koaxial angeordneten Drehwerkzeugen gemeinsam oder relativ zueinander drehbar sind.

Die Werkzeugaufnahme 98 des zweiten Bauteils ist am einfachsten durch eine Innenaufnahme 100 nach Art einer Imbusschraube oder einer Torxaufnahme gebildet, die vorzugsweise in dem, dem ersten Bauteil abgewandten Stirnende des zweiten Bauteils vorgesehen ist.

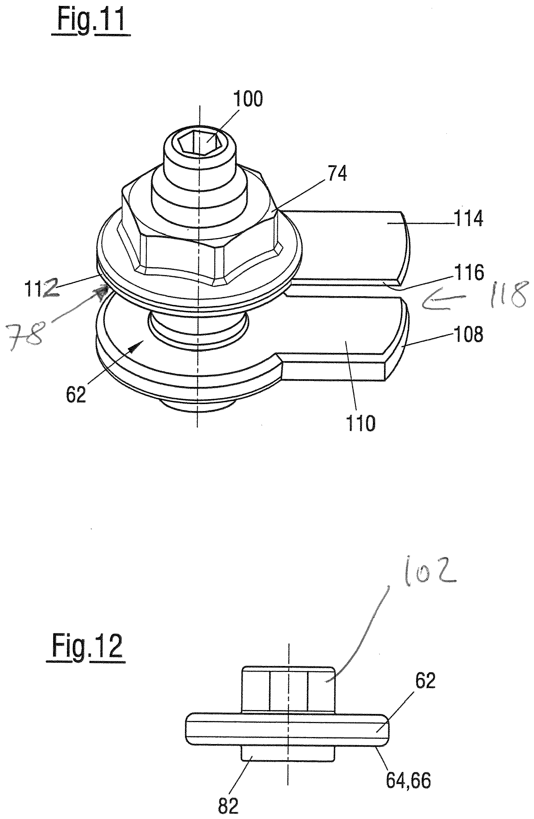

Das erste Bauteil kann ebenfalls mit einer Werkzeugaufnahme 102 versehen werden, die insbesondere in Form einer Außenmehrkant, wie ein Außensechskant, ausgebildet sein kann, wie in der Fig. 12 gezeigt ist. Diese Werkzeugaufnahme 102 kann von Vorteil sein, zum Beispiel dann, wenn die Klemmeinrichtung 28 von Hand betätigt wird. Sollte eine Werkzeugaufnahme wie 102 am ersten Bauteil 62 vorgesehen werden, könnte auf eine Werkzeugaufnahme wie 98 am zweiten Bauteil 72 verzichtet werden.

In dem Beispiel gemäß Fig. 8A bis C ist das erste Bauteil mit einem integrierten Flansch 104 versehen ist, dessen, dem zweiten Bauteil zugewandten, Stirnseite direkt die erste Klemmfläche bildet. In der gleichen Weise ist die Kontermutter 74 mit einem integrierten Flansch 106 versehen, dessen, dem ersten Bauteil 62 zugewandten, Stirnseite direkt die zweite Klemmfläche 78 bildet. Alternativ hierzu könnte die Kontermutter 74, wie in Fig. 11 gezeigt an eine separate Scheibe 112 angreifen, die die zweite Klemmfläche 78 bildet.

Man sieht aus den Fig. 3A bis C, dass sich ein Bereich des Außengewindes 70 des zweiten Bauteils 72 und der Bereich des Übergangs vom ersten Bauteil 62 in den zweiten Bauteil 72 durch die Öffnung 44 der Montageeinrichtung 10 hindurch erstreckt. Mit anderen Worten erstreckt sich das Außengewinde 70 des zweiten Bauteils durch den Ausschnitt im Klemmbereich 38 der Montageeinrichtung 10, wobei die Montageeinrichtung zwischen dem ersten Bauteil 62 und der auf dem zweiten Bauteil 72 aufgeschraubten Kontermutter 74 klemmbar ist.

Die gegenseitige axiale Verschiebbarkeit des ersten Bauteils 62 und des zweiten Bauteils 72 stellt sicher, dass das Gewinde des Stehbolzens 22 beide Bauteile ohne weiteres durchdringen kann, da der Längenausgleich trotz der drehfesten Anordnung eine durchgehende Gewindefurche sicherstellt. Die Drehbarkeit der Klemmeinrichtung als Einheit auf dem Stehbolzen 22 ermöglicht eine genaue Positionierung der Höhe der einen Klemmfläche 66 gegenüber dem Träger 14. Durch Drehen der Kontermutter kann dann die andere Klemmfläche 78 in Richtung auf die erstgenannte Klemmfläche 66 zu bewegt werden, und die Montageeinrichtung 10 zwischen den Klemmflächen 66 und 78 geklemmt werden, ohne die vorher eingestellte Position der erstgenannten Klemmfläche 66, die den Höhenausgleich sicherstellt, zu stören. Da die Montageeinheit 10 im nicht geklemmten Zustand flexibel ist, kann sie die S-Form gemäß Fig. 3D passend zu der Fehlorientierung des Stehbolzens 22 oder desgleichen automatisch und leicht annehmen, wie auch eine etwaige in einer Querebene gekippte Position des Klemmbereichs gemäß Fig. 3E, der vollflächig an der erstgenannten Klemmfläche 66 anliegt. Dabei wird die von der Kontermutter 74 gebildete Klemmfläche 78 parallel zur erstgenannten Klemmfläche 66 geführt, so dass auch diese Klemmfläche 78 vollflächig zur Anlage an den Klemmbereich kommt. Beim Festziehen der Kontermutter 74 wird das zweite Bauteil 72 aufgrund der beschränkten axialen Verschiebbarkeit zwischen dem ersten Bauteil 62 und dem zweiten Bauteil 72 zunächst minimal etwas von dem ersten Bauteil 62 entfernt, wodurch die Kontermutter 74 nun ihre konternde Funktion entfaltet und den Klemmbereich zwischen den beiden Klemmflächen 66, 78 festklemmt. Hierdurch wird die Montageeinrichtung automatisch in der ausgewählten ausgerichteten Position "eingefroren". Die Montageeinrichtung ist nun von einem flexiblen Gebilde in ein eher steifes Gebilde umgewandelt worden, wenn auch eine gewisse dämpfende Wirkung noch gegeben ist.

Wie in Fig. 12 gezeigt ist, kann der Klemmbereich der Klemmeinrichtung seitlich von der mittleren Längsachse verlagert werden. Hierzu wird das erste Bauteil entweder mit einer seitlich angeordneten Fahne 108 versehen, deren, dem zweiten Bauteil 72 zugewandten, Seite 110 direkt die erste Klemmfläche 66 bildet. Die Kontermutter 74 drückt dann an eine getrennte Scheibe 112, die ebenfalls mit einer seitlich angeordneter Fahne 114 versehen ist, deren, dem ersten Bauteil 62 zugewandten, Seite 116 die zweite Klemmfläche 78 bildet. Die zweite Klemmfläche 78 und die erste Klemmfläche 66 formen gemeinsam eine U-förmige Klemmaufnahme 118.
Zwischen der seitlich angeordneten ersten Klemmfläche 66 der Klemmeinrichtung 28 und der seitlich angeordneten zweiten Klemmfläche 78 der Klemmeinrichtung 28 wird eine U-förmige Klemmaufnahme gebildet, die wie bei einem Schraubenstock einen Gegenstand, hier den Klemmbereich der Montageeinrichtung 10, klemmend aufnehmen kann.

Die Bauteile der Klemmeinrichtung sind vorzugsweise alle aus Metall ausgebildet, könnten aber alternativ hierzu einzeln, oder alle, aus faserverstärktem Kunststoff bestehen. Wenn sie aus Metall bestehen, dann werden sie vernünftigerweise wie Befestigungselemente im Allgemeinen als Kaltschlagteile angefertigt.

Der Zusammenbau der kompletten Montageeinrichtung kann auf verschiedener Weise erfolgen.

Es ist zum Beispiel möglich, der Montagepaket 40, oder nur die zwei Teile eines einzigen Montageelements 30, mit oder ohne eines Federelements 40 oder beider Federelemente 50, falls ein solches überhaupt vorhanden ist, an die Halterungen 20 des Gegenstandes mittels Befestigungsschrauben 35 anzuschrauben, die durch die Befestigungslöcher eingeführt werden, die die Ausschnitte an den Enden 34 der Teile 32 jedes Montageelements bilden. Wenn ein Federelement 50 vorgesehen ist, werden die Befestigungsbolzen 35 auch durch die entsprechenden Löcher an den Enden des Federelements geführt. Wird nur ein Federelement 50 verwendet, wird dies üblicherweise unterhalb der Köpfe der Befestigungsbolzen 35 gelegt. Wenn zwei Federelemente vorgesehen sind, ist es egal welches oben und welches unten liegt.

Als nächstes wird die Klemmeinrichtung 28 montiert. Dies kann dadurch erfolgen, dass das erste Bauteil 62 von unten kommend mit dem unteren Ende des von oben kommenden zweiten Bauteils 72, das durch die Öffnung 44 hindurchgeführt wird, mittels der beschriebenen Klickverbindung zusammengefügt werden. Die Kontermutter 74 kann vorher auf das zweite Bauteil aufgeschraubt werden, oder erst jetzt, ist aber noch nicht festgezogen worden. Der Gegenstand mit den montierten Montageeinrichtungen wird dann auf dem Träger positioniert, so dass jede Schraubbolzen 22 mit der dazu zugeordneten Montageeinrichtung 10 ausgerichtet ist. Dies kann manuell oder automatisch erfolgen. Eine Hilfe bietet hier ein ausgeprägter Einführkonus am unteren Ende jedes erste Bauteil 62. Da die Kontermutter 74 noch nicht festgezogen sind, (ist bei nur eine Montageeinrichtung 10) sind die Montageelemente 30 bzw. die Montagepakete 40 noch flexibel und passen sich automatisch die aktuelle Winkelposition der Schraubbolzen 22 an. Durch Drehen der aus dem ersten Bauteil 62 und dem zweiten Bauteil 72 bestehenden Einheit wird diese Einheit entlang des jeweiligen Schraubbolzens 22 bewegt, bis die erwünschte Position erreicht ist. Die Klemmfläche 66 bestimmt dann die Position des Gegenstandes 12. Die axiale Verschiebbarkeit zwischen dem ersten Bauteil 62 und dem zweiten Bauteil 72 stellt sicher, dass das Gewinde des Schraubbolzens 22 hindurchgeführt werden kann obwohl diese drehfest aneinander befestigt sind. Sonst wäre dies nicht möglich, da der genaue Anfang der beiden Innengewinde 60 und 68 in Bezug auf die mittlere Längsachse des ersten Bauteils 62 und des zweiten Bauteils 72 wenigstens bei den üblichen Herstellungsmethoden nicht vorhersehbar ist und daher kompensiert werden muss.

Wenn die erwünschte Position erreicht ist, wird die Kontermutter 74 festgezogen damit die zweite Klemmfläche 78 in Eingriff mit dem Klemmbereich 38 der Montageeinrichtung 10 kommt und der leicht verformte Zustand des jeweiligen Montageelements 30 bzw. des jeweiligen Montagepakets 40 eingefroren wird. Die Montage ist erfolgt.

Denkbar ist auch das Montageelement 30, oder das Montagepaket 40, ggf. mit einem Federelement 50 oder mit zwei Federelementen 50 mit der Klemmeinrichtung vor der Montage an den Gegenstand 12 oder an dessen Halterungen zusammenzubauen. Die Kontermutter 74 kann dann angezogen werden um die Montageeinrichtung zusammenzuhalten. In diesem Fall wird die Kontermutter 74 dann wieder gelockert werden müssen vor der Anbringung der Klemmeinrichtung an die Schraubbolzen 22. Alternativ hierzu könnten die Befestigungsbolzen 35, die zur Befestigung der Montageeinrichtung 10 an dem Gegenstand 12 bzw. an den Halterungen 20 dienen, vorher an die Montageeinrichtung 10 montiert werden, um den Zusammenhalt der Teile zu gewährleisten. Zum Beispiel könnten die Befestigungsbolzen 35 als Gewindeführende- oder Schneidende-Bolzen ausgeführt werden, die nur in der unterste Lage des jeweiligen Montagepakets 40 (je nach Auslegung ein Montageelement 30 oder ein Federelement 50) ein Gewinde formt oder schneidet. Bei der endgültigen Anbringung am Gegenstand 12, oder an den Halterungen 20, werden beim Weiterdrehen der Befestigungsbolzen 43, die in der untersten Lage geformten Gewinde zerstört, haben aber bereits ihr Zweck des provisorischen Zusammenhalts erfüllt.

Auch könnten andere Hilfsmittel dem Zweck des provisorischen Zusammenhalts Erfüllen, zum Beispiel könnte Schrumpfschlauch verwendet werden um die Montageeinheit zusammenzuhalten.

Die vorherige Montage der Befestigungsbolzen 35 hat auch Vorteile bei der Automatische Montage. Besonders günstig wäre es wenn die Befestigungsbolzen 35 von oben kommend an den Gegenstand 12 bzw. an den Halterungen 20 angebracht werden. Dann könnte die gesamte Montage einer Montageeinheit 10 mit einer automatisierten Einrichtung mit entsprechenden Drehwerkzeugen von oben kommend erfolgen.

In manchen Einbausituationen können das erste Bauteil und das zweite Bauteil mit Vorteil vertauscht werden, beispielsweise so, dass das erste Bauteil 62 oben und das zweite Bauteil 72 unten angeordnet ist.

### Bezuqszeichenliste:

- 10: Montageeinrichtung
- 12: Projektor, Gegenstand
- 14: Träger
- 16: vertikale Kanten vom Gegenstand 12
- 20: Halterung
- 22: Stanz- und Nietbolzen, Befestigungselement
- 24: Kopfteil des Stanz- und Nietbolzens 22
- 26: Schaftteil des Stanz- und Nietbolzens, Gewindestift
- 28: Klemmeinrichtung
- 30: Montageelement
- 32: Teil des Montageelements 30
- 34: Endbereich von Teil 32, Abschnitt
- 35: Befestigungsbolzen
- 36: anderes Ende von Teil 32
- 38: Klemmbereich von Montageelement 30
- 40: Montagepaket
- 42: Ausschnitt an den Enden 36 der Teile 32, Befestigungsloch
- 44: Öffnung
- 46: Zunge
- 48: Längsrichtung von Montageelement 30
- 50: Federelement
- 52: flächiger Bereich vom Federelement 50
- 54: federnder Bereich vom Federelement 50
- 56: mittlerer Bereich vom Federelement 50
- 58: Öffnung vom Federelement 50
- 60: Innengewinde vom ersten Bauteil 62
- 62: erstes Bauteil
- 64: Seite von ersten Bauteil 62
- 66: Klemmfläche
- 68: Innengewinde vom zweiten Bauteil 72
- 70: Außengewinde vom zweiten Bauteil 72
- 72: zweites Bauteil
- 74: Kontermutter
- 76: Seite von der Kontermutter
- 78: zweite Klemmfläche
- 80: Verbindung zwischen dem ersten Bauteil 62 und dem zweiten Bauteil 72
- 82: Hohlzylinder am oberen Ende vom ersten Bauteil 62
- 84: Längsrippen
- 86: Ringbereich am Ende des Hohlzylinders 82
- 88: unteres Ende des zweiten Bauteils 72
- 90: innere Längsnuten am zylindrischen Ende vom zweiten Bauteil 72
- 92: Ringnut
- 94: Zylinderbereich am unteren Ende des zweiten Bauteils 72
- 96: oberes Ende vom zweiten Bauteil 72
- 98: Werkzeugaufnahme
- 100: Innenaufnahme
- 102: Werkzeugaufnahme am ersten Bauteil 62
- 104: Flansch vom ersten Bauteil 62
- 106: Flansch von der Kontermutter 74
- 108: Fahne von Flansch des ersten Bauteils 62
- 110: Seite von Fahne 108
- 112: separate Scheibe
- 114: Fahne von der Scheibe 112
- 116: Seite der separaten Scheibe 112
- 118: Klemmaufnahme

## Patentansprüche

1. Klemmeinrichtung (28), insbesondere zur Anwendung mit einer Montageeinrichtung (10), umfassend
ein ein Innengewinde (60) aufweisendes erstes Bauteil (62) mit einer Seite (64), die entweder direkt oder indirekt über ein getrenntes Teil eine erste Klemmfläche (66) bildet,
ein zweites ein Innengewinde (68) und ein Außengewinde (70) aufweisendes Bauteil (72), das axial verschiebbar aber drehfest am ersten Bauteil (62) anbringbar ist, wobei die jeweiligen Innengewinde (60) des ersten Bauteils (62) und des zweiten Bauteils (72) ausgelegt sind, um mittels eines Bolzenelements mit Außengewinde (26) höhen- bzw. abstandsverstellbar gemeinsam an einem Träger (14) befestigt zu werden und
eine Kontermutter (74), die auf das Außengewinde (70) des zweiten Bauteils (72) aufschraubbar ist, dessen der erstgenannten Klemmfläche (66) zugewandte Seite entweder direkt oder indirekt über ein zweites Teil (112) eine zweite Klemmfläche (78) bildet, wobei die erste und zweite einander zugewandte Klemmfläche (66, 78) zur klemmenden Aufnahme eines Gegenstandes (12) bzw. des Klemmbereichs (38) der Montageeinrichtung (10) ausgelegt sind.

2. Klemmeinrichtung (28) nach Anspruch 1,
**dadurch gekennzeichnet, dass** das erste Bauteil (62) am zweiten Bauteil (72) mittels einer insbesondere leicht lösbaren Verbindung (80), wie zum Beispiel einer Klickverbindung, oder durch eine eher permanente Verbindung wie einen umgebördelten Kragen (Ringbereich 86) an dem einen Bauteil, der in einer Hinterschneidung (von der Ringnut (92) gebildet) eingreift, unter Beibehaltung der relativen axialen Verschiebbarkeit befestigt ist.

3. Klemmeinrichtung (28) nach Anspruch 1 oder 2,
**dadurch gekennzeichnet, dass** das zweite Bauteil (72) insbesondere im Bereich seines dem ersten Bauteil abgewandten Endes (96) eine Werkzeugaufnahme (98) zur lösbaren Anbringung eines Drehwerkzeugs aufweist, wobei die Werkzeugaufnahme (98) des zweiten Bauteils (72) vorzugsweise in seiner Querabmessung kleiner ausgebildet ist als die Kontermutter (74), damit das zweite Bauteil (72) und die Kontermutter (74) mit unterschiedlichen koaxial angeordneten Drehwerkzeugen gemeinsam oder relativ zueinander drehbar sind.

4. Klemmeinrichtung (28) nach Anspruch 3,
**dadurch gekennzeichnet, dass** die Werkzeugaufnahme (98) des zweiten Bauteils durch eine Innenaufnahme (100) gebildet ist, die vorzugsweise in das dem ersten Bauteil abgewandte Stirnende des zweiten Bauteils vorgesehen ist.

5. Klemmeinrichtung (28) nach einem der vorhergehenden Ansprüche,
**dadurch gekennzeichnet, dass** das erste Bauteil mit einer Werkzeugaufnahme (102) versehen ist, insbesondere in Form eines Außenmehrkants.

6. Klemmeinrichtung (28) nach einem der vorhergehenden Ansprüche,
**dadurch gekennzeichnet, dass** das erste Bauteil (62) mit einem Flansch (104) versehen ist, dessen dem zweiten Bauteil (72) zugewandte Stirnseite direkt die erste Klemmfläche (66) bildet oder an eine Scheibe angreift, die die erste Klemmfläche bildet.

7. Klemmeinrichtung (28) nach einem der vorhergehenden Ansprüche 1 bis 5,
dadurch g**ekennzeichnet**, dass die Kontermutter (74) mit einem Flansch (106) versehen ist, dessen dem ersten Bauteil (62) zugewandte Stirnseite direkt die zweite Klemmfläche (78) bildet oder an eine Scheibe (112) angreift, die die zweite Klemmfläche bildet.

8. Klemmeinrichtung (28) nach einem der vorhergehenden Ansprüche,
**dadurch gekennzeichnet, dass** das Außengewinde (70) des zweiten Bauteils (72) sich durch einen Ausschnitt (44) im Klemmbereich (38) der Montageeinrichtung (10) erstreckt, wobei die Montageeinrichtung (10) zwischen dem ersten Bauteil (62) und der auf dem zweiten Bauteil aufgeschraubten Kontermutter (74) klemmbar ist.

9. Klemmeinrichtung (28) nach einem der Ansprüche 1 bis 5,
**dadurch gekennzeichnet, dass** das erste Bauteil (62) entweder mit einer seitlich angeordneten Fahne (108) versehen ist, deren dem zweiten Bauteil (72) zugewandte Seite direkt die erste Klemmfläche (66) bildet oder an eine vorzugsweise drehfest am ersten Bauteil (62) befestigte Scheibe angreift, die mit einer seitlich angeordneten Fahne versehen ist, deren dem zweiten Bauteil zugewandte Seite die erste Klemmfläche bildet.

10. Klemmeinrichtung (28) nach einem der vorhergehenden Ansprüche 1 bis 5,
**dadurch gekennzeichnet, dass** die Kontermutter (74) entweder mit einer seitlich angeordneten Fahne versehen ist, deren dem ersten Bauteil (62) zugewandte Seite direkt die zweite Klemmfläche bildet oder an eine vorzugsweise drehfest aber axial verschiebbar am ersten Bauteil (62) befestigte Scheibe (112) angreift, die mit einer seitlich angeordneten Fahne (114) versehen ist, deren dem ersten Bauteil (62) zugewandte Seite die zweite Klemmfläche (78) bildet.

11. Klemmeinrichtung (28) nach einem der vorhergehenden Ansprüche, 9 oder 10,
**dadurch gekennzeichnet, dass** zwischen der seitlich angeordneten ersten Klemmfläche (66) der Klemmeinrichtung und der seitlich angeordneten zweiten Klemmfläche (78) der Klemmeinrichtung, eine Klemmaufnahme (118) gebildet ist, in der beispielsweise der Klemmbereich (38) der Montageeinrichtung (10) oder ein eines anderen zu klemmenden Teils wie der Spiegel eines Interferometers klemmbar ist.

12. Klemmeinrichtung (28) nach einem der vorhergehenden Ansprüche,
**dadurch gekennzeichnet, dass** das erste Bauteil (62), das zweite Bauteil (72) und die Kontermutter alle aus Metall bestehen oder einige davon aus Metall und andere aus Kunststoff ggf. mit Faserverstärkung bestehen.

13. Klemmeinrichtung (28) nach Anspruch 12,
**dadurch gekennzeichnet, dass** die aus Metall bestehenden Teile als Kaltschlagteile angefertigt sind.

14. Klemmeinrichtung (28) nach einem der vorhergehenden Ansprüche 1 bis 11,
**dadurch gekennzeichnet, dass** das erste Bauteil (62), das zweite Bauteil (72) und die Kontermutter alle aus Kunststoff ggf. mit Faserverstärkung bestehen, wobei sie vorzugsweise im Spritzgußverfahren hergestellt sind.

## Claims

1. A clamping device (28), in particular for use with an installation device (10), comprising
a first component (62) having an internal thread (60) and having a side (64) which forms a first clamping surface (66) either directly or indirectly via a separate part;
a second component (72) which has an internal thread (68) and an external thread (70) and which is axially displaceably but rotationally fixedly attachable to the first component (62), with the respective internal threads (60) of the first component (62) and of the second component (72) being designed to be jointly fastened in a vertically adjustable manner or with an adjustable spacing to a carrier (14) by means of a bolt element having an external thread (26); and
a counter nut (74) which can be screwed onto the external thread (70) of the second component (72) and whose side facing the first-named clamping surface (66) forms a second clamping surface (78) either directly or indirectly via a second part (112), with the first and second mutually facing clamping surfaces (66, 78) being designed for the clamping reception of an article (12) or of the clamping region (38) of the installation device (10).

2. A clamping device (28) in accordance with claim 1,
**characterized in that** the first component (62) is fastened to the second component (72) by means of a releasable connection (80), in particular an easily releasable connection, such as a click connection or by a rather more permanent connection such as a beaded over collar (ring region 86) on the one component which engages into an undercut (formed by the ring groove (92)) while retaining the relative axial displaceability.

3. A clamping device (28) in accordance with claim 1 or claim 2,
**characterized in that** the second component (72) has a tool mount (98) for the releasable attachment of a rotatable tool, in particular in the region of its end (96) remote from the first component, with the tool mount (98) of the second component (72) preferably being made smaller in its transverse dimension than the counter nut (74) so that the second component (72) and the counter nut (74) can be jointly rotated or rotated relative to one another by different coaxially arranged rotatable tools.

4. A clamping device (28) in accordance with claim 3,
**characterized in that** the tool mount (98) of the second component is formed by an internal mount (100) which is preferably provided at the front end of the second component remote from the first component.

5. A clamping device (28) in accordance with any one of the preceding claims,
**characterized in that** the first component is provided with a tool mount (102), in particular in the form of an external polygon.

6. A clamping device (28) in accordance with any one of the preceding claims,
**characterized in that** the first component (62) is provided with a flange (104) whose end face facing the second component (72) directly forms the first clamping surface (66) or acts on a washer which forms the first clamping surface.

7. A clamping device (28) in accordance with any one of the preceding claims 1 to 5,
**characterized in that** the counter nut (74) is provided with a flange (106) whose end face facing the first component (62) directly forms the second clamping surface (78) or acts on a washer (112) which forms the second clamping surface.

8. A clamping device (28) in accordance with any one of the preceding claims,
**characterized in that** the outer thread (70) of the second component (72) extends through a cutout (44) in the clamping region (38) of the installation device (10), with the installation device (10) being clampable between the first component (62) and the counter nut (74) screwed onto the second component.

9. A clamping device (28) in accordance with any one of the claims 1 to 5,
**characterized in that** the first component (62) is either provided with a laterally arranged lug (108) whose side facing the second component (72) directly forms the first clamping surface (66) or acts on a washer which is preferably rotationally fixedly fastened to the first component (62) and which is provided with a laterally arranged lug whose side facing the second component forms the first clamping surface.

10. A clamping device (28) in accordance with any one of the preceding claims 1 to 5,
**characterized in that** the counter nut (74) is either provided with a laterally arranged lug whose side facing the first component (62) directly forms the second clamping surface or acts on a washer (112) which is preferably rotationally fixedly but axially displaceably fastened to the first component (62) and which is provided with a laterally arranged lug (114) whose side facing the first component (62) forms the second clamping surface (78).

11. A clamping device (28) in accordance with one of the preceding claims 9 or 10,
**characterized in that** a clamping recess (118) is formed between the laterally arranged first clamping surface (66) of the clamping device and the laterally arranged second clamping surface (78) of the clamping device and in which, for example, the clamping region (38) of the installation device (10) or of another part to be clamped, such as the mirror of an interferometer, can be clamped.

12. A clamping device (28) in accordance with any one of the preceding claims,
**characterized in that** the first component (62), the second component (72) and the counter nut all consist of metal or some of them consist of metal and others of plastic, optionally with fiber reinforcement.

13. A clamping device (28) in accordance with claim 12,
**characterized in that** the parts consisting of metal are formed as cold headed parts.

14. A clamping device (28) in accordance with any one of the preceding claims 1 to 11,
**characterized in that** the first component (62), the second component (72) and the counter nut all consist of plastic, optionally with fiber reinforcement, wherein they are preferably manufactured by the injection molding process.

## Revendications

1. Dispositif de serrage (28), en particulier destiné à être utilisé avec un dispositif de montage (10), comportant
un premier composant (62) présentant un taraudage (60) et présentant une face (64) qui forme une première surface de serrage (66) soit directement soit indirectement par l'intermédiaire d'une pièce séparée,
un second composant (72) présentant un taraudage (68) et un filetage (70) et susceptible d'être monté sur le premier composant (62) de façon mobile en translation axiale, mais solidairement en rotation, les taraudages respectifs (60) du premier composant (62) et du second composant (72) étant conçus pour être fixés conjointement sur un support (14), avec faculté de réglage en hauteur et vis-à-vis de la distance, à l'aide d'un élément de boulon pourvu d'un filetage (26), et
un contre-écrou (74) qui peut être vissé sur le filetage (70) du second composant (72), dont la face tournée vers la première surface de serrage (66) forme une seconde surface de serrage (78) soit directement soit indirectement par l'intermédiaire d'une seconde pièce (112), les première et seconde surfaces de serrage (66, 78) tournées l'une vers l'autre étant conçues pour la réception par serrage d'un objet (12) ou de la zone de serrage (38) du dispositif de montage (10).

2. Dispositif de serrage (28) selon la revendication 1,
**caractérisé en ce que**
le premier composant (62) est fixé au second composant (72) à l'aide d'une liaison (80) en particulier facile à détacher, telle que par exemple une liaison à encliquetage, ou par une liaison plutôt permanente, telle qu'une collerette rabattue (zone annulaire 86), sur l'un des composants, laquelle vient s'engager dans une contre-dépouille (formée par la rainure annulaire (92)), tout en conservant la mobilité axiale relative.

3. Dispositif de serrage (28) selon la revendication 1 ou 2,
**caractérisé en ce que**
le second composant (72) présente, en particulier dans la zone de son extrémité (96) détournée du premier composant, un logement d'outil (98) pour monter de façon détachable un outil de rotation, le logement d'outil (98) du second composant (72) étant de préférence réalisé plus petit, quant à sa dimension transversale, que le contre-écrou (74) pour que le second composant (72) et le contre-écrou (74) puissent être tournés conjointement ou l'un par rapport à l'autre avec des outils de rotation différents agencés coaxialement.

4. Dispositif de serrage (28) selon la revendication 3,
**caractérisé en ce que**
le logement d'outil (98) du second composant est formé par un logement femelle (100) qui est prévu de préférence dans l'extrémité frontale du second composant détournée du premier composant.

5. Dispositif de serrage (28) selon l'une des revendications précédentes,
**caractérisé en ce que**
le premier composant est pourvu d'un logement d'outil (102), en particulier sous la forme d'un polygone mâle.

6. Dispositif de serrage (28) selon l'une des revendications précédentes,
**caractérisé en ce que**
le premier comportant (62) est pourvu d'une bride (104) dont la face frontale tournée vers le second composant (72) forme directement la première surface de serrage (66) ou s'engage sur un disque qui constitue la première surface de serrage.

7. Dispositif de serrage (28) selon l'une des revendications précédentes 1 à 5,
**caractérisé en ce que**
le contre-écrou (74) est pourvu d'une bride (106) dont la face frontale tournée vers le premier composant (62) forme directement la seconde surface de serrage (78) ou s'engage sur un disque (112) qui constitue la seconde surface de serrage.

8. Dispositif de serrage (28) selon l'une des revendications précédentes,
**caractérisé en ce que**
le filetage (70) du second composant (72) s'étend à travers une entaille (44) dans la zone de serrage (38) du dispositif de montage (10), le dispositif de montage (10) pouvant être serré entre le premier composant (62) et le contre-écrou (74) vissé sur le second composant.

9. Dispositif de serrage (28) selon l'une des revendications 1 à 5,
**caractérisé en ce que**
le premier composant (62) est soit pourvu d'une patte (108) disposée latéralement dont la face tournée vers le second composant (72) constitue directement la première surface de serrage (66), soit s'engage sur un disque fixé de préférence solidairement en rotation au premier composant (62), qui est pourvu d'une patte disposée latéralement dont la face tournée vers le second composant constitue la première surface de serrage.

10. Dispositif de serrage (28) selon l'une des revendications précédentes 1 à 5,
**caractérisé en ce que**
le contre-écrou (74) est soit pourvu d'une patte disposée latéralement dont la face tournée vers le premier composant (62) constitue directement la seconde surface de serrage, soit s'engage sur un disque (112) fixé au premier composant (62) de préférence solidairement en rotation mais de façon mobile en translation axiale, qui est pourvu d'une patte (114) disposée latéralement dont la face tournée vers le premier composant (62) constitue la seconde surface de serrage (78).

11. Dispositif de serrage (28) selon l'une des revendications précédentes 9 ou 10,
**caractérisé en ce que**
un logement de serrage (118) est formé entre la première surface de serrage (66) du dispositif de serrage disposée latéralement et la seconde surface de serrage (78) du dispositif de serrage disposée latéralement, logement dans lequel peut être serrée par exemple la zone de serrage (38) du dispositif de montage (10) ou une autre pièce à serrer, telle que le miroir d'un interféromètre.

12. Dispositif de serrage (28) selon l'une des revendications précédentes,
**caractérisé en ce que**
le premier composant (62), le second composant (72) et le contre-écrou sont tous constitués en métal ou bien quelques-uns d'eux sont constitués en métal et d'autres sont constitués en matière plastique le cas échéant renforcée de fibres.

13. Dispositif de serrage (28) selon la revendication 12,
**caractérisé en ce que**
les éléments constitués en métal sont fabriqués sous forme d'éléments frappés à froid.

14. Dispositif de serrage (28) selon l'une des revendications précédentes 1 à 11,
**caractérisé en ce que**
le premier composant (62), le second composant (72) et le contre-écrou sont tous constitués en matière plastique le cas échéant renforcée de fibres, en étant réalisés de préférence par un procédé de coulée par injection.
